# EUROPÄISCHE PATENTSCHRIFT

(11) **EP 2 703 260 B1**
(45) Veröffentlichungstag und Bekanntmachung des Hinweises auf die Patenterteilung: **02.10.2019**
(21) Anmeldenummer: 13179544.5
(22) Anmeldetag: 07.08.2013
(51) Int. Cl.: B62D 53/10

(54) **Sattelkupplung**
Fifth wheel
Sellette d'attelage

(30) Priorität: 14.08.2012 DE 102012214413
(43) Veröffentlichungstag der Anmeldung: 05.03.2014
(73) Patentinhaber: JOST-Werke Deutschland GmbH, 63263 Neu-Isenburg (DE)
(72) Erfinder: Strütt, Achim, 64560 Riedstadt (DE)
(74) Vertreter: Mehler Achler

(56) Entgegenhaltungen:
- DE-A1- 2 121 876
- DE-A1-102008 000 799
- JP-A- S55 123 572
- US-A- 2 581 254
- US-A- 3 239 239
- US-A- 3 251 610
- US-A- 3 600 006
- US-A- 4 871 182

## Beschreibung

Die Erfindung betrifft eine Sattelkupplung mit einem Zuggriff gemäß dem Oberbegriff des Anspruchs 1.

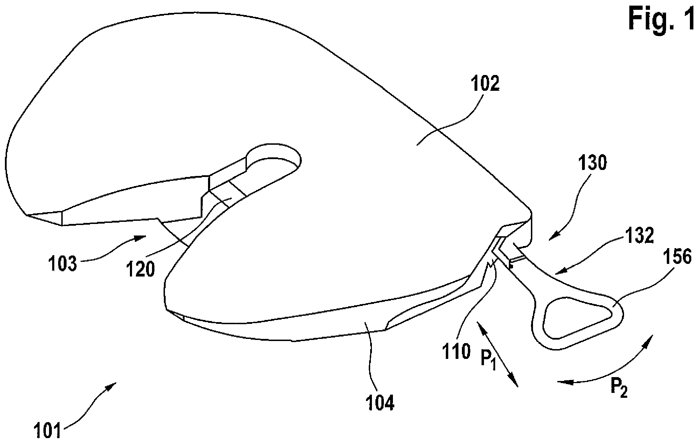

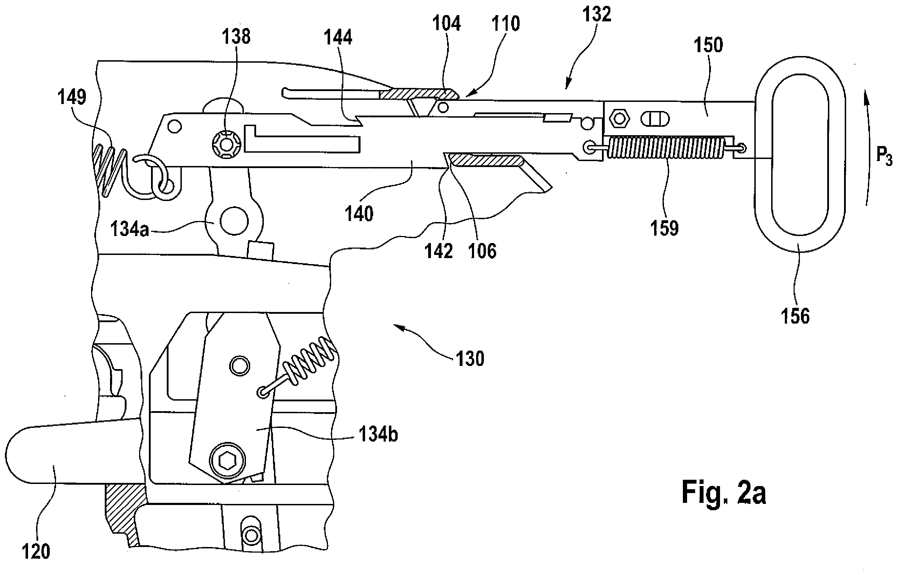

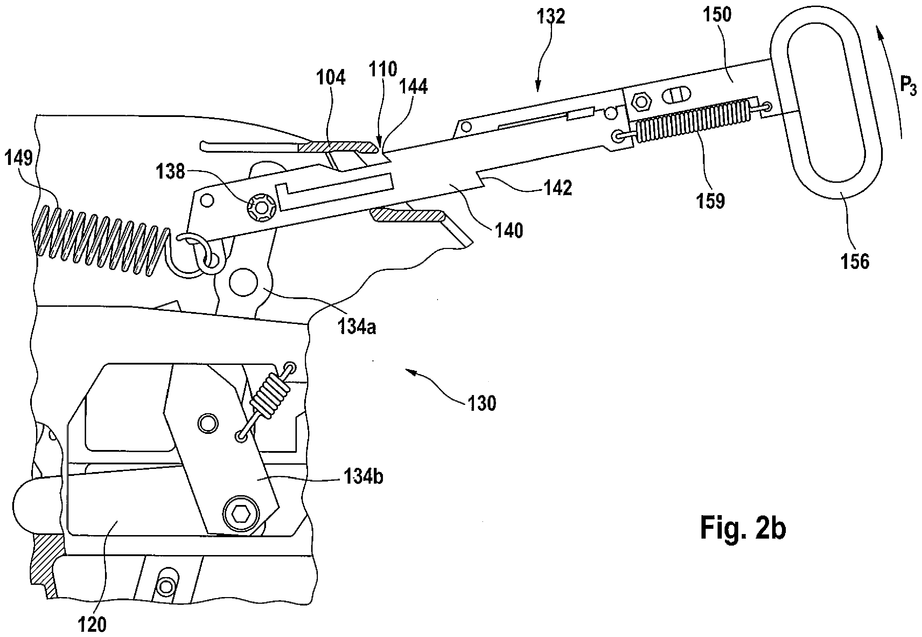

Nachfolgend wird der derzeitige Stand der Technik an einem Beispiel im Zusammenhang mit den Figuren 1, 2a und 2b erläutert:
In der Figur 1 ist eine Sattelkupplung 101 perspektivisch dargestellt. Die Sattelkupplung weist eine Sattelkupplungsplatte 102 mit einer Einführöffnung 103 auf, in die ein Königszapfen (nicht dargestellt) eines Aufliegers eingeführt und dort verriegelt werden kann. Hierzu ist unter der Sattelkupplungsplatte 102 unter anderem z. B. ein Verschlussriegel 120 angeordnet, der nach dem Einfahren des Königszapfens zusammen mit einem Verschlusshaken (nicht dargestellt) die Verriegelung des Königszapfens bewirkt.

Zum Betätigen des Verschlussriegels 120 ist es aus dem Stand der Technik bekannt, eine Betätigungsvorrichtung 130 vorzusehen, die einen zweiteiligen Zuggriff 132 aufweist, der im Wesentlichen aus einem Zughebel 140 und einem Sicherungshebel 150 besteht. An dem Sicherungshebel 150 ist ein Griff 156 angeordnet ist. Der Zuggriff 132 erstreckt sich durch eine Öffnung 110 in einer Seitenwand 104 der Sattelkupplungsplatte 102. Innerhalb dieser Öffnung 110 kann der Zuggriff 132 sowohl in Längsrichtung des Zuggriffs 132 (Pfeil P₁) verschoben als auch in horizontaler Richtung geschwenkt (Pfeil P₂) werden.

In den Figuren 2a und 2b sind vereinfachte Unteransichten der in Figur 1 gezeigten Sattelkupplung 101 mit einer Betätigungseinrichtung 130 gemäß des Standes der Technik dargestellt, wie sie beispielsweise in der DE 10 2008 000 799 A1 beschrieben wird.

Zughebel 140 und Sicherungshebel 150 sind in Längsrichtung relativ zueinander verschiebbar, wobei der Zughebel 140 und der Sicherungshebel 150 über eine Zugfeder 159 miteinander verbunden sind. Über eine weitere Zugfeder 149 ist der Zughebel 140 an einem Bauteil (nicht gezeigt) der Sattelkupplungsplatte 102 befestigt. Hierbei ist die Kraft dieser Zugfeder 149 größer als die Kraft der Zugfeder 159.

Der Zughebel 140 weist ein Haltemittel 142 in Gestalt einer Haltenase auf, mit der der Zughebel 140 an der Innenfläche 106 der Seitenwand 104 der Sattelkupplungsplatte 102 anliegen kann, wenn sich der Verschlussriegel 120 in der in Figur 2a gezeigten Verriegelungsposition befindet. Der Zuggriff 132 befindet sich in seiner Sperrstellung.

Der Zughebel 140 ist über zwei Verbindungshebel 134a, 134b mit dem Verschlussriegel 120 gelenkig verbunden. In der Sperrstellung des Zuggriffs 132 ist die Schwenkbarkeit des Zuggriffs 132 in der Öffnung 110 durch den seitlich gegenüber dem Zughebel 140 vorstehenden Sicherungshebel 150 blockiert, so dass ein unbeabsichtigtes Lösen der Fixierung des Zuggriffs 132 und damit ein Lösen aus der Sperrstellung verhindert wird. Die Abmessungen von Zuggriff 132 und Öffnung 110 sind in Sperrstellung des Zuggriffs 132 derart aufeinander abgestimmt, das kein Verschwenken des Zuggriffs 132 möglich ist.

Um den Verschlussriegel 120 aus seiner Verriegelungsstellung zu bewegen, muss der Zuggriff 132 aus seiner Sperrstellung nach außen in eine Freigabestellung gezogen werden. Hierzu ist es notwendig, dass der Zughebel 140 zum Lösen seiner Fixierung innerhalb der Öffnung 110 um den Gelenkpunkt 138 in Pfeilrichtung P₃ geschwenkt werden kann, damit sich die Haltenase 142 von der Innenfläche 106 der Seitenwand 104 löst und der Zuggriff 132 insgesamt nach außen gezogen werden kann. Es ist daher notwendig, den Sicherungshebel 150 mittels des Griffs 156 gegenüber dem Zughebel 140 soweit herauszuziehen, dass der Sicherungshebel die Öffnung 110 freigibt und der Zughebel 140 im Bereich der Öffnung 110 verschwenkt (Pfeil P₃) werden kann. Nur in dieser Auszugsposition des Sicherungshebels ist die freie Schwenkbarkeit des Zuggriffs 132 möglich.

Nach dem Herausziehen des Zuggriffs 132, wodurch der Verschlussriegel 120 in seine Offenstellung gebracht wird, kann mittels einer Haltenase 144 der Zuggriff 132 in seiner Freigabestellung fixiert werden. Nach dem Loslassen des Griffs 156 wird der Sicherungshebel 150 durch die Zugfeder 159 wieder in ihre Ruheposition zurückgezogen.

Beim Einfahren des Königszapfens wird die Haltenase 144 des Zuggriffs 132 ausgeklinkt und der Zughebel 140 durch die Zugfeder 149 zurückgezogen. Damit der Zuggriff 132 und damit der Zughebel 140 mit seiner Haltenase 142 sich hierbei durch die Öffnung 110 in die Sattelkupplung 101 bewegen kann, muss der Zuggriff 132 gelängt werden, d. h. der Sicherungshebel muss in seine Auszugsposition gebracht werden. In dieser Auszugsposition muss der Zuggriff 132 durch die Öffnung 110 zurückgeschoben werden, wobei das Problem auftritt, dass hohe Reibungskräfte überwunden werden müssen und der Zuggriff 132 sich in der Öffnung 110 verkanten und verklemmen kann. Außerdem muss hierbei die Federkraft der Zugfeder 159 überwunden werden.

Aus der US 3,239,239 ist eine nachrüstbare Verlängerung für einen an einer Sattelkupplung angebrachten Schwenkhebel bekannt, welcher der Entriegelung des Königszapfens einer Sattelkupplung dient. Der innenliegende Verschlussmechanismus für den Königszapfen ist nicht im Detail offenbart.

Weitere Schwenkhebel sind auch aus der US 2,581,254 und der US 3,251,610 bekannt.

Die aus der US 3,600,006 bekannte Sattelkupplung weist einen Zughebel mit einem Griff auf. Am Ende des Zughebels ist ein Verriegelungselement für den Königszapfen vorgesehen. Um die Verriegelung zu lösen muss der Zughebel aus der Sattelkupplung herausgezogen werden. In der Verriegelungsstellung wird der Hebel von einem Laschenmechanismus gehalten, der zum Lösen der Verriegelung vorab gelöst werden muss.

Die US 4,871,182 offenbart ebenfalls eine Sattelkupplung mit einem Verriegelungsmechanismus für den Königszapfen. Der Verriegelungsmechanismus weist jedoch keine Sicherungseinrichtung auf. Vielmehr wird die Entriegelung durch eine kombinierte Bewegung aus Ziehen und Drehen bewirkt.

Auch die JP S55-123572 A offenbart eine Sattelkupplung mit einem Verriegelungsmechanismus für den Königszapfen.

Die DE 10 2008 000 799 A1 offenbart eine Sattelkupplung gemäß dem Oberbegriff des Anspruchs 1.

Die Aufgabe der Erfindung besteht darin, eine Sattelkupplung bereitzustellen, mit der der Verriegelungsvorgang des Verschlusselements erleichtert wird und zuverlässiger durchführbar ist.

Diese Aufgabe wird mit einer Sattelkupplung mit den Merkmalen des Anspruchs 1 gelöst.

Nachfolgend werden die einzelnen Stellungen, die die Bauteile der Sattelkupplung einnehmen können, erläutert.

Das Verschlusselement ist in eine Verriegelungsstellung und in eine Offenstellung bewegbar. Die Verriegelungsstellung bezeichnet diejenige Stellung, die das Verriegelungselement nach dem Einfahren eines Königszapfens in die Einfahröffnung der Sattelkupplung zwecks Verriegelung des Königszapfens einnimmt. Die Offenstellung bezeichnet diejenige Stellung, in der der Königszapfen ungehindert in der Einfahröffnung der Sattelkupplung ein- und ausfahren kann.

Der Zuggriff ist in eine Sperrstellung und in eine Freigabestellung bewegbar. In der Sperrstellung befindet sich das Verschlusselement in der Verriegelungsstellung, wobei diese Verriegelungsstellung gesperrt wird. In Freigabestellung befindet sich das Verschlusselement in Offenstellung. Vorzugsweise wird der Zuggriff verschwenkbar und in Längsrichtung verschiebbar angeordnet. Vorzugsweise ist die Sperrstellung durch Schwenken des Zuggriffs lösbar. Durch anschließendes Ziehen in Längsrichtung des Zuggriffs wird die Freigabestellung erreicht. Vorzugsweise ist eine erste Federeinrichtung vorgesehen, die den Zuggriff von seiner Freigabestellung in Richtung Sperrstellung bewegt, so dass ein Einschwenken in die Sperrstellung erfolgen kann.

Der Sicherungshebel ist in Ruheposition und in Auszugsposition bewegbar. Der Sicherungshebel ist relativ zum Zughebel in Längsrichtung des Zuggriffs verschiebbar angeordnet. Wenn der Sicherungshebel sich in seiner eingezogenen Position befindet, nimmt er die Ruheposition ein. Wenn der Sicherungshebel ausgezogen wird, befindet er sich in seiner Auszugsposition. Vorzugsweise ist eine zweite Federeinrichtung vorgesehen, die den Sicherungshebel in seiner Ruheposition hält.

Das Blockierelement ist in eine Blockierposition und in eine Bereitschaftsposition bewegbar. Die Blockierposition kann das Blockierelement dann annehmen, wenn der Zuggriff sich in Sperrstellung befindet. Diese Sperrstellung wird dann mittels des Blockierelementes blockiert. In Bereitschaftsstellung befindet sich das Blockierelement dann, wenn der Zuggriff sich nicht in Sperrstellung befindet. Vorzugsweise ist eine dritte Federeinrichtung vorgesehen, die das Blockierelement in Blockierposition bewegt.

Um den Zuggriff in der Verriegelungsstellung des Verschlussriegels zu fixieren, d. h. ein unbeabsichtigtes Lösen aus der fixierten Stellung zu verhindern, ist eine separate Sicherungseinrichtung vorgesehen, die an der Sattelkupplung, vorzugsweise in der Nähe der Öffnung, angeordnet ist.

Der Vorteil einer separaten Sicherungseinrichtung, die unabhängig von der Stellung von Zughebel und Sicherungshebel eine wirksame Blockierung des Zuggriffs in der Sperrstellung bewirkt, besteht darin, dass die Abmessungen des Durchführungsraums nicht mehr auf die Abmessungen des Zuggriffs unter Berücksichtigung bestimmter Positionen des Sicherungshebels abgestimmt sein müssen, wie dies beim Stand der Technik der Fall ist. Die Kontur des Sicherungshebels liegt vorzugsweise für jede Relativstellung von Sicherungshebel und Zughebel innerhalb der Kontur des Zughebels. Dies bedeutet, dass die Breite des Zuggriffs durch die Breite des Zughebels bestimmt wird. Die Abmessungen des Durchführungsraums, insbesondere die Breite des Durchführungsraums, sind auf die maximale Breite des Zughebels derart abgestimmt, dass eine Führung des Zuggriffs gewährleistet ist. Größere Abmessungen des Durchführungsraums haben den weiteren Vorteil, dass für den Zuggriff bei einer Bewegung von der Freigabestellung in die Sperrstellung mehr Raum zur Verfügung steht, so dass ein Verklemmen oder Verkanten nicht mehr auftreten kann. Außerdem muss die am Zughebel angreifende Feder, die den Zuggriff in Sperrstellung zieht, nicht mehr - wie beim Stand der Technik - die Kraft der am Sicherungshebel angeordneten Feder überwinden. Eine Längung des Zuggriffs entfällt.

Das Vorsehen eines beweglich angeordneten Blockierelementes hat den Vorteil, dass anhand der Stellung des Blockierelementes für das Bedienungspersonal ersichtlich ist, ob das Verschlusselement sich in seiner Verriegelungsstellung befindet oder nicht.

Um die Blockierung des Zuggriffs in dessen Sperrstellung aufzuheben, ist es erforderlich, das Blockierelement aus der Blockierposition herauszubewegen. Da die Sicherungseinrichtung an der Sattelkupplungsplatte angeordnet ist, ist es für die Bedienungsperson aufwendig, das Blockierelement von Hand zu betätigen. Da der Zuggriff Mittel zur Manipulation der Sicherungseinrichtung aufweist, kann die Bedienperson bequem im Abstand von der Sattelkupplung die erforderlichen Maßnahmen zur Aufhebung der Blockierung durchführen.

Der Sicherungshebel blockiert die Schwenkbarkeit des Zuggriffs in der Öffnung nicht, sondern hat nur die Aufgabe, bei Betätigung des Sicherungshebels die Sicherungseinrichtung zu lösen.

Vorzugsweise ist die Sicherungseinrichtung an der Außenseite der Sattelkupplung und besonders bevorzugt an der Außenseite einer Seitenwand der Sattelkupplungsplatte angeordnet. Bei Anbringung der Sicherungseinrichtung an der Außenseite ist die Stellung des Blockierelementes besonders gut sichtbar. Diese Außenanbringung hat den Vorteil, dass die Sicherungseinrichtung gleichzeitig als Anzeigeeinrichtung genutzt werden kann.

Vorzugsweise sind die Mittel zur Manipulation der Sicherungseinrichtung an dem Sicherungshebel angeordnet. Dies hat den Vorteil, dass die bekannten zweiteiligen Zuggriffe, bei denen der Sicherungshebel relativ zum Zughebel in Längsrichtung des Zuggriffs verschiebbar ausgeführt ist, diesbezüglich nicht verändert werden müssen.

Der Sicherungshebel ist vorzugsweise von einer eingezogenen Ruheposition in eine Auszugsposition verschiebbar. Diese Bewegung in die Auszugsposition wird vorzugsweise für die Betätigung des Blockierelementes genutzt, damit dieses die Blockierstellung verlässt und in die Bereitschaftsstellung übergeht.

Vorzugsweise weist der Sicherungshebel eine Schräge auf, die in Sperrstellung des Zuggriffs beim Bewegen des Sicherungshebels von der Ruheposition in die Auszugsposition ein Verschwenken des Zuggriffs bewirkt. Diese Schräge ist an derselben Seite des Zuggriffs angeordnet wie das Haltemittel des Zughebels. Diese Schräge hat den Vorteil, dass die erforderliche Schwenkbewegung des Zugriffs beim Lösen der Sperrstellung unterstützt wird. Mit der Wahl der Anordnung der Schräge kann beim Ziehen des Sicherungshebels Zeitpunkt und Ort für das Einsetzen der Schwenkbewegung definiert werden.

Vorzugsweise ist das Mittel zur Manipulation des Blockierelementes ein Vorsprung. Beim Herausziehen des Sicherungshebels kontaktiert der Vorsprung das Blockierelement und bewegt dieses aus der Blockierstellung heraus. Vorzugsweise ist das Blockierelement schwenkbar angeordnet. Vorzugsweise ist das Blockierelement eine Sperrklinke.

Vorzugsweise ist der Vorsprung als Verbreiterung des Sicherungshebels ausgeführt. Es handelt sich hierbei um eine Verbreiterung in horizontaler Richtung. Vorzugweise weist der Sicherungshebel einen schmalen Abschnitt auf, der in Richtung erstes Ende des Zuggriffs vorzugsweise sprunghaft in einen breiten Abschnitt übergeht. Durch diese Verbreiterung wird der Vorsprung zur Manipulation der Sicherungseinrichtung gebildet. Diese Verbreiterung hat den Vorteil, dass das Blockierelement nach dem Betätigen durch den Vorsprung seine eingenommene Bereitschaftsstellung bis zum Erreichen der Auszugsstellung des Sicherungshebels beibehält.

Vorzugsweise weist der Zughebel ein Haltemittel vorzugsweise in Gestalt einer Haltenase auf, das zum Halten des Zughebels in der Sperrstellung des Zuggriffs vorgesehen ist. Das Haltemittel liegt vorzugsweise in Sperrstellung des Zuggriffs am Rand des Durchführungsraums der Durchführungseinrichtung an.

Vorzugsweise ist das Haltemittel auf der gegenüberliegenden Seite des Vorsprungs angeordnet.

Die Sicherungseinrichtung ist vorzugsweise auf derselben Seite wie das Manipulierungsmittel an der Sattelkupplungsplatte angeordnet.

Zum Blockieren des Zuggriffs in der Sperrstellung kontaktiert das Blockierelement vorzugsweise eine Seitenfläche des Zuggriffs. Vorzugsweise kontaktiert das Blockierelement eine Seitenfläche an der Seite, wo der Vorsprung angeordnet ist. Die Blockierung des Zuggriffs in seiner Sperrstellung ist somit auf einfache Weise möglich.

Vorzugsweise blockiert das Blockierelement ein Verschwenken des Zuggriffs, wenn sich der Zuggriff in seiner Sperrstellung befindet.

Vorzugsweise liegt das Blockierelement in Blockierstellung an einer Seitenfläche des Zuggriffs, besonders bevorzugt an einer Seitenfläche des Zughebels an. Diese Fläche liegt dem Haltemittel des Zughebels gegenüber. Die in Sperrstellung in horizontaler Richtung wirkenden Kräfte liegen somit in derselben Ebene.

Vorzugsweise ist das Blockierelement in eine Bereitschaftsstellung und in eine Blockierposition bewegbar. Eine einfache Ausführung sieht vor, dass das Blockierelement gravitationsgetrieben in die Blockierposition fällt.

Gemäß einer anderen Ausführungsform ist das Blockierelement mittels einer dritten Federeinrichtung in seiner Bereitschaftsstellung vorgespannt. In diesem Fall wird das Blockierelement federgetrieben in die Blockierstellung bewegt. Dies ist dann von Vorteil, wenn Umwelteinflüsse die Beweglichkeit des Blockierelementes beeinträchtigen sollten.

Vorzugsweise ist das Blockierelement als Sperrklinke ausgebildet.

Vorzugsweise ist das Blockierelement an der Durchführungseinrichtung, insbesondere an oder neben dem Durchführungsraum angeordnet. Die Durchführungseinrichtung ist ein Teil der Sattelkupplung, in dem der Zuggriff geführt werden kann. Vorzugsweise ist der Durchführungsraum eine Öffnung oder eine Ausnehmung in der Sattelkupplungsplatte. Vorzugsweise ist die Durchführungseinrichtung eine Seitenwand der Sattelkupplungsplatte mit einer Öffnung oder einer Ausnehmung.

Vorzugsweise sind die Abmessungen des Zuggriffs und des Durchführungsraums derart bemessen, dass der Zuggriff mit in Ruheposition befindlichem Sicherungshebel von einer Freigabestellung in seine Sperrstellung durch den Durchführungsraum bewegbar ist.

Die Abmessungen des Durchführungsraums und des Zuggriffs sind vorzugsweise derart aufeinander abgestimmt, dass der Zuggriff in jeder Relativstellung des Zughebels und des Sicherungshebels zum vollständigen Lösen der Sperrstellung schwenkbar ist.

Der Zuggriff weist vorzugsweise eine zweite Federeinrichtung auf, die zwischen dem Zughebel und dem Sicherungshebel angeordnet ist. Die zweite Federeinrichtung ist vorzugsweise am ersten Ende des Zuggriffs angeordnet. Die Federeinrichtung liegt somit unter der Sattelkupplungsplatte und ist geschützt angeordnet, was ebenfalls die Funktionssicherheit der Betätigungseinrichtung erhöht.

Der Zuggriff weist vorzugsweise einen Griff für die manuelle Betätigung oder eine pneumatische Betätigungseinrichtung auf.

Bevorzugte Ausführungsformen der Erfindung werden nachfolgend anhand der Zeichnungen näher erläutert.

Es zeigen:
- Figur 1: eine perspektivische Darstellung einer Sattelkupplung gemäß des Standes der Technik,
- Figur 2a,b: Unteransichten der in Figur 1 gezeigten Sattelkupplung mit einer Betätigungseinrichtung gemäß dem Stand der Technik in zwei verschiedenen Positionen,
- Figuren 3+4: eine erfindungsgemäße Betätigungseinrichtung in zwei Positionen entsprechend den Darstellungen der Figuren 2a und 2b,
- Figuren 5-7: vergrößerte Darstellungen der Betätigungseinrichtung zur Erläuterung der Sicherungseinrichtung.

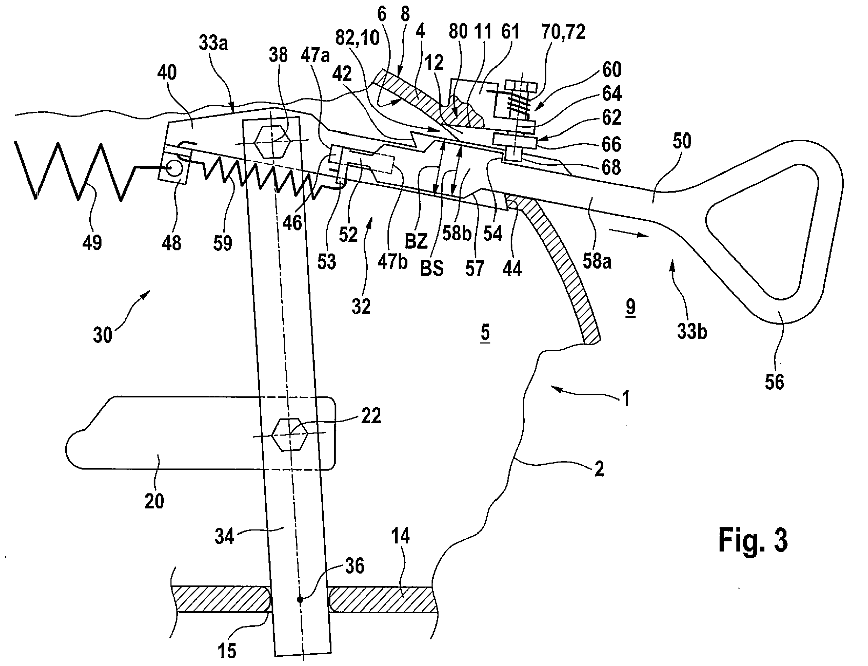

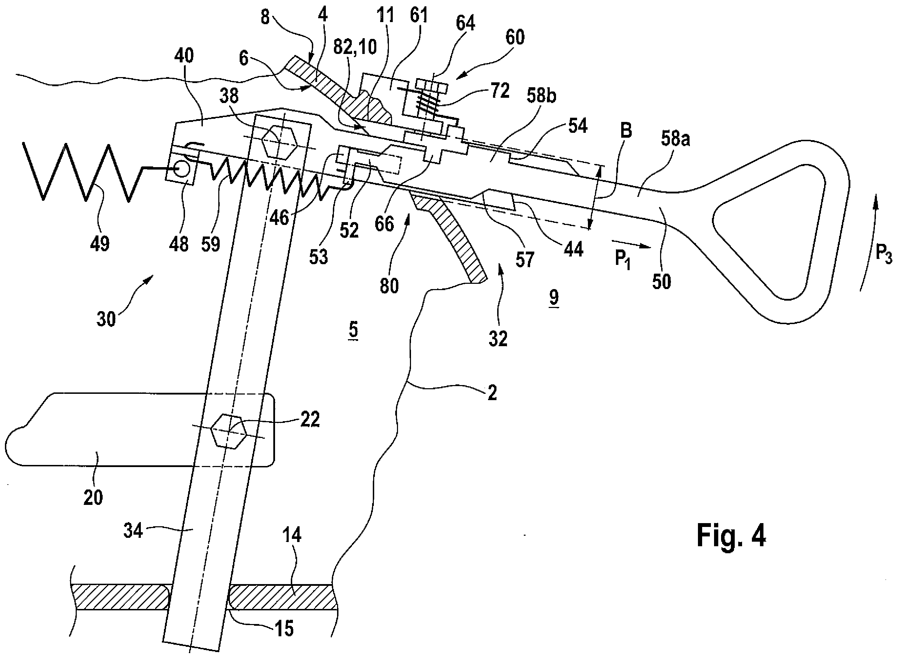

In den Figuren 3 und 4 ist eine Unteransicht eines Teils einer Sattelkupplungsplatte 2 einer Sattelkupplung 1 mit Seitenwand 4 dargestellt. Der Raum unter der Sattelkupplungsplatte 2, der durch die Seitenwand 4 begrenzt wird, bildet den Innenraum 5. Der Raum außerhalb der Seitenwand 4 ist der Außenraum 9.

Die Seitenwand 4 bildet mit der Öffnung 10 eine Führungseinrichtung 80 für einen Zuggriff 32 der Betätigungseinrichtung 30, wobei der Zuggriff 32 einen Zughebel 40 und einen Sicherungshebel 50 aufweist. Der Durchführungsraum 82 wird durch die Begrenzung der Öffnung 10 definiert.

Der Sicherungshebel 50 ist in Längsrichtung relativ zum Zughebel 40 verschiebbar angeordnet. Hierzu ist eine Führungsöffnung 46 im Zughebel 40 vorgesehen, in der ein Führungselement 52 des Sicherungshebels 50 geführt wird. Die Länge der Führungsöffnung 46 begrenzt den Auszugsweg des Sicherungshebels 50 und definiert an ihren beiden Enden 47a,b die Ruhe- und die Auszugsposition des Sicherungshebels 50.

Der Zughebel 40 weist in einem mittleren Bereich des Zuggriffs 32 eine Breite B_{Z} auf, die geringfügig größer ist als die Breite B_{S} des Sicherungshebels 50. B_{Z} kann auch gleich B_{S} sein. Die Kontur des Sicherungshebels 50 sollte bezogen auf die Ruhestellung jedenfalls innerhalb der Kontur des Zughebels 40 liegen.

Der Zughebel 40 weist an gegenüberliegenden Seiten in entgegengesetzten Richtungen Haltenasen 42 und 44 auf. Mit der Haltenase 44 liegt der Zughebel 40 in der Sperrstellung des Zuggriffs 32 an der Innenfläche 6 der Seitenwand 4 an. Außerdem weist der Sicherungshebel 50 einen Vorsprung 54 auf, der das Mittel zur Manipulation der Sicherungseinrichtung 60 bildet. Der Vorsprung 54 wird durch den Übergang von einem schmalen Abschnitt 58a in einen breiten Abschnitt 58b des Sicherungshebels 50 gebildet.

Der Zughebel 40 ist am ersten Ende 33a im Gelenkpunkt 38 mit einem Zwischenhebel 34 verbunden, der im Gelenkpunkt 22 mit dem Verschlusselement 20 gelenkig verbunden ist. Der Zwischenhebel 34 erstreckt sich über den Gelenkpunkt 22 hinaus und wird in einer Ausnehmung 15 einer Rippe 14 der Sattelkupplungsplatte 2 geführt. Der Zwischenhebel 34 ist somit um die Achse 36 schwenkbar gelagert.

Der Zughebel 40 erstreckt sich über den Gelenkpunkt 38 hinaus und weist am Ende 33a eine Lasche 48 auf, an der einerseits eine erste Federeinrichtung 49 und andererseits eine zweite Federeinrichtung 59 befestigt ist. Die Federeinrichtung 49 ist an einem Bauteil der Sattelkupplungsplatte (nicht dargestellt) befestigt und ist in der hier gezeigten Ausführungsform eine Zugfeder.

Die Kraft der zweiten Federeinrichtung 59 ist schwächer ausgelegt als die der ersten Federeinrichtung 49. Die zweite Federeinrichtung 59 ist an einer Lasche 53 des Führungselementes 52 des Sicherungshebels 50 angeordnet. Die Anordnung der Federeinrichtung 59 am ersten Ende 33a des Zuggriffs 32 hat den Vorteil, dass die Federeinrichtung 49 im Innenraum 5 liegt und damit in einem geschützten Bereich der Sattelkupplung 1.

Die Zugfeder 49 hält den Sicherungshebel 50 in seiner Ruhestellung, in der das Führungselement 52 am Ende 47a der Führungsöffnung 46 anliegt.

Die Zugfeder 49 hält den Zughebel 40 und somit den Zuggriff 32 in seiner Sperrstellung.

Am zweiten Ende 33b, das im Außenraum 9 liegt, weist der Zuggriff 32 einen Griff 56 auf, der am Sicherungshebel 50 befestigt ist. Mittels des Griffs 56 kann der Zuggriff 32 geschwenkt und in Längsrichtung verschoben werden. Anstelle des Griffs 56 kann auch eine entsprechende pneumatische Betätigungseinrichtung (nicht dargestellt) vorgesehen sein.

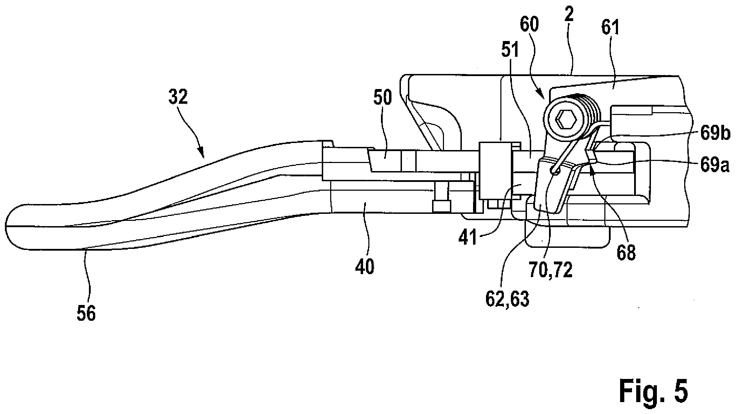

An der Außenfläche 8 der Wand 4 ist eine Sicherungseinrichtung 60 dargestellt, die ein an der Wand 4 befestigtes Halteelement 61 umfasst, an dem ein Blockierelement 62 in Gestalt einer Sperrklinke 63 um eine Schwenkachse 64 schwenkbar angeordnet ist. Mittels einer dritten Federeinrichtung 70 in Gestalt einer Wendelfeder 72 wird die Sperrklinke 63 in eine nach unten geschwenkte Blockierposition gedrängt (s. Fig. 5).

Die Sicherungseinrichtung 60 ist somit an der Führungseinrichtung 80 angeordnet und befindet sich auf der gegenüberliegenden Seite der Haltenase 44.

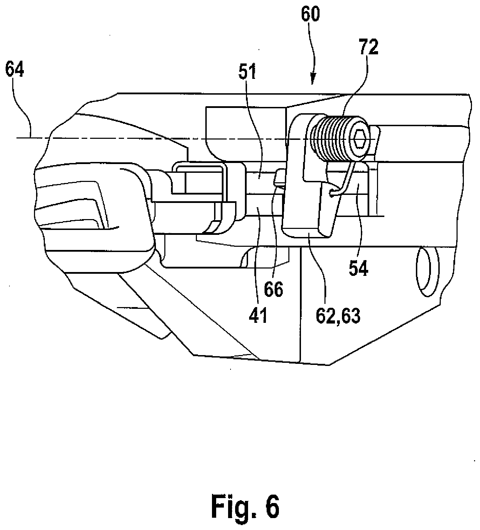

Wie in den Figuren 5 und 6 dargestellt ist, besitzt die Sperrklinke 63 einen seitlich angebrachten Zapfen 66. Außerdem weist die Sperrklinke 63 an der Unterseite einen Vorsprung 68 auf, der dreieckförmig mit einer Spitze 69a und einer Gleitschräge 69b ausgebildet ist. Dieser Vorsprung 68 erstreckt sich parallel zur Schwenkachse 64 und ist auch am Zapfen 66 ausgebildet (siehe Figuren 3 und 6). Der Sicherungshebel 50 weist einen Vorsprung 54 auf, der der Sicherungseinrichtung 60 gegenüberliegt. Dieser Vorsprung 54 bildet das Mittel zur Manipulation der Sicherungseinrichtung 60.

Der Vorsprung 68 der Sperrklinke 63 liegt dem Vorsprung 54 des Sicherungshebels 50 sowie der Seitenfläche 51 des Sicherungshebels 50 gegenüber.

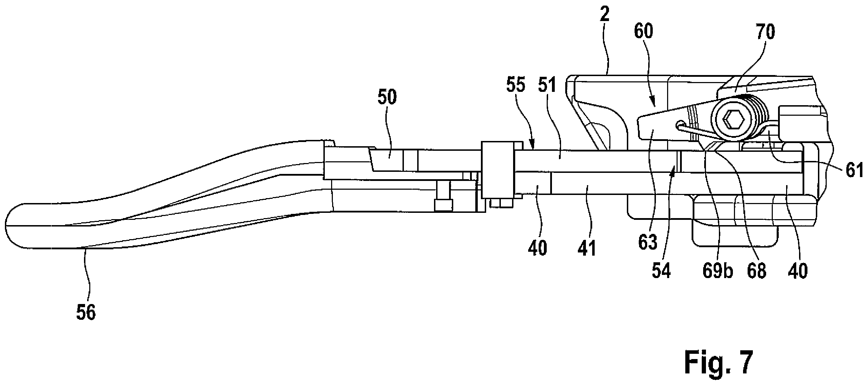

In den Figuren 5 und 7 sind beide Positionen der Sperrklinke 63 in Seitenansicht dargestellt. Es ist zu sehen, dass die Sperrklinke 63 eine keilförmige Gestalt aufweist und dass mittels der dritten Federeinrichtung 70 die Sperrklinke 63 in ihre Blockierposition vorgespannt wird (Figur 5).

In der Figur 7 ist zu sehen, dass beim Herausziehen des Sicherungshebels 50 die Sperrklinke 63 von dem Sicherungshebel 50 von dem Vorsprung 54 unterlaufen wird und somit die Sperrklinke 63 und die Sicherungseinrichtung 60 gelöst wird, so dass die freie Schwenkbarkeit des Zuggriffs 32 ermöglicht wird. Die Sperrklinke 63 befindet sich in ihrer Bereitschaftsposition.

An der Stellung der Sperrklinke 63 ist erkennbar, in welcher Position sich der Verschlussriegel befindet.

Die Funktionsweise der Betätigungseinrichtung wird nachfolgend anhand der Figuren 3 bis 7 näher erläutert.

In der Figur 3 befindet sich das Verschlusselement 20 in Verriegelungsstellung. Dies bedeutet, dass sich der Zuggriff 32 in Sperrstellung befindet, wobei sich der Sicherungshebel 50 in Ruhestellung befindet. Der Zughebel 40 liegt mit seiner Haltenase 44 am Rand der Öffnung 10 an der Innenfläche 6 der Wand 4 an und kann somit nicht in Längsrichtung verschoben werden.

Die Abmessungen von Öffnung 10 und Zuggriff 32 sind derart aufeinander abgestimmt, dass auch in der Sperrstellung ein Freiraum 12 zwischen dem Zuggriff 32 und dem Öffnungsrand 11 vorliegt, so dass der Zuggriff 32 innerhalb der Öffnung 10 verschwenkt werden kann und anschließend ungehindert in axialer Richtung innerhalb der Öffnung 10 nach außen bewegt werden kann.

Um ein unbeabsichtigtes Verschwenken des Zuggriffs 32 aus der Sperrstellung zu verhindern, ist die Sicherungseinrichtung 60 vorgesehen, die mit der Sperrklinke 63 an einer Seitenfläche 41 des Zughebels 40 anliegt und somit den Zuggriff 32 blockiert.

Um das Verschlusselement 20 aus der Verriegelungsstellung in die Offenstellung zu bringen, wird der Zuggriff 32 in seine Freigabestellung manuell bewegt. Hierbei wird zuerst der Sicherungshebel 50 gegen die Kraft der Feder 59 aus seiner Ruhe- in seine Auszugsstellung gezogen. Hierbei gelangt der Vorsprung 54 in Kontakt mit der Gleitschräge 69b des Vorsprungs 68, wodurch die Sperrklinke 63 gegen die Kraft der Feder 72 einer dritten Federeinrichtung 70 angehoben wird, bis die Spitze 69a auf der Oberseite 55 des Sicherungshebels 50 aufliegt (siehe Figur 4 und Figur 7). Die Sperrklinke 63 befindet sich nunmehr in Bereitschaftsposition.

Mit zunehmender Auszugslänge gelangt die Schräge 57 in Kontakt mit dem Rand 11 der Öffnung 10, wodurch die Schwenkbewegung ausgelöst bzw. unterstützt wird. Der Zuggriff 32 wird in der Öffnung 10 verschwenkt, wobei sich die Haltenase 44 von der Seitenwand 4 löst. Danach wird der Zuggriff 32 gegen die Kraft der Feder der zweiten Federeinrichtung 59 weiter nach außen gezogen, so dass das Verschlusselement 20 entriegelt ist (siehe Figur 4). Der Zughebel 40 kann anschließend in dieser Position fixiert werden, indem der Zughebel 40 mit der Haltenase 42 an der Außenfläche 8 der Seitenwand 4 eingehängt wird.

Um das Verschlusselement 20 wieder in die Verriegelungsposition zu bringen, wird der Zuggriff 32 in entgegengesetzter Richtung verschwenkt, so dass sich die Haltenase 42 von der Seitenwand 4 löst. Der Sicherungshebel 50 befindet sich in seiner Ruheposition.

Durch Loslassen des Sicherungshebels 50 wird der Zuggriff 32 durch die Kraft der Feder der ersten Federeinrichtung 49 nach innen gezogen. Der Zuggriff 32 gleitet hierbei ungehindert durch die Öffnung 10, deren Breite B größer ist als die Breite B_{Z} des Zughebels 40.

Beim Zurückziehen, Einschwenken und Einhaken des Zuggriffs 32 mittels der Haltenase 44 wandert der Sicherungshebel 50 unter der Sperrklinke 63 nach innen und bei Erreichen des Vorsprungs 54 fällt die Sperrklinke 63 in ihre Blockierposition zurück und sperrt den Zuggriff 32, wenn der Zuggriff 32 seine Sperrstellung erreicht hat (siehe Figur 3).

### Bezugszeichenliste

- 1: Sattelkupplung
- 2: Sattelkupplungsplatte
- 4: Seitenwand
- 5: Innenraum
- 6: Innenfläche der Seitenwand
- 8: Außenfläche der Seitenwand
- 9: Außenraum

- 10: Öffnung
- 11: Öffnungsrand
- 12: Freiraum
- 14: Rippe
- 15: Ausnehmung

- 20: Verschlusselement
- 22: Gelenkpunkt

- 30: Betätigungseinrichtung
- 32: Zuggriff
- 33a: erstes Ende
- 33b: zweites Ende
- 34: Zwischenhebel
- 36: Schwenkachse
- 38: Gelenkpunkt

- 40: Zughebel
- 41: Seitenfläche
- 42: Haltenase
- 44: Haltenase, Haltemittel
- 46: Führungsöffnung
- 47a: Ende der Führungsöffnung
- 47b: Ende der Führungsöffnung
- 48: Lasche
- 49: erste Federeinrichtung

- 50: Sicherungshebel
- 51: Seitenfläche
- 52: Führungselement
- 53: Lasche
- 54: Vorsprung
- 55: Oberseite
- 56: Griff
- 57: Schräge
- 58a: schmaler Abschnitt
- 58b: breiter Abschnitt
- 59: zweite Federeinrichtung

- 60: Sicherungseinrichtung
- 61: Halteelement
- 62: Blockierelement
- 63: Sperrklinke
- 64: Schwenkachse
- 66: Zapfen
- 68: Vorsprung
- 69a: Spitze
- 69b: Gleitschräge
- 70: dritte Federeinrichtung
- 72: Wendelfeder

- 80: Führungseinrichtung
- 82: Durchführungsraum

- 101: Sattelkupplung
- 102: Sattelkupplungsplatte
- 103: Einfahröffnung
- 104: Seitenwand
- 106: Innenfläche der Seitenwand

- 110: Öffnung

- 120: Verschlussriegel

- 130: Betätigungseinrichtung
- 132: Zuggriff
- 134a: Verbindungshebel
- 134b: Verbindungshebel
- 138: Gelenkpunkt

- 140: Zughebel
- 142: Haltemittel
- 144: Haltenase
- 149: Zugfeder

- 150: Sicherungshebel
- 156: Griff
- 159: Zugfeder
- B: Breite der Öffnung
- B_{S}: Breite des Sicherungshebels
- B_{Z}: Breite des Zughebels

- P₁: Pfeil
- P₂: Pfeil
- P₃: Pfeil

## Patentansprüche

1. Sattelkupplung (1) mit
- einer Sattelkupplungsplatte (2),
- einem Verschlusselement (20) für einen Königszapfen,
- einem Zuggriff (32), der einen Zughebel (40) und einen Sicherungshebel (50) aufweist und der an einem ersten Ende (33a) über Verbindungsmittel mit dem Verschlusselement (20) verbunden ist,
- wobei der Zuggriff (32) in einem Durchführungsraum (82) einer Führungseinrichtung (80) der Sattelkupplungsplatte (2) in eine Sperrstellung und in eine Freigabestellung bewegbar ist, und.
- Mittel zum Blockieren des Zuggriffs (32) in seiner Sperrstellung,
**dadurch gekennzeichnet,**
**dass** die Mittel zum Blockieren des Zuggriffs (32) aus einer Sicherungseinrichtung (60) mit einem beweglich angeordneten Blockierelement (62) besteht, wobei die Sicherungseinrichtung (60) an der Sattelkupplungsplatte (2) angeordnet ist, und
**dass** der Zuggriff (32) Mittel zur Manipulation der Sicherungseinrichtung (60) aufweist.

2. Sattelkupplung nach Anspruch 1,
**dadurch gekennzeichnet,**
**dass** die Sicherungseinrichtung (60) an einer Außenfläche der Sattelkupplungsplatte (2) angeordnet ist.

3. Sattelkupplung nach Anspruch 1 oder 2,
**dadurch gekennzeichnet,**
**dass** die Mittel zur Manipulation des Blockierelementes (62) am Sicherungshebel (50) angeordnet sind.

4. Sattelkupplung nach einem der Ansprüche 1 bis 3,
**dadurch gekennzeichnet,**
**dass** der Sicherungshebel (50) in Längsrichtung des Zuggriffs (32) relativ zum Zughebel (40) in eine Auszugs- und in eine Ruheposition verschiebbar ist.

5. Sattelkupplung nach Anspruch 4,
**dadurch gekennzeichnet,**
**dass** das Mittel zur Manipulation des Blockierelementes (62) das Blockierelement (62) beim Verschieben des Sicherungshebels (50) in die Auszugsposition von einer Blockierstellung in eine Bereitschaftsstellung bewegt.

6. Sattelkupplung nach einem der Ansprüche 1 bis 5,
**dadurch gekennzeichnet,**
**dass** das Mittel zur Manipulation des Blockierelementes (62) ein Vorsprung (54) ist.

7. Sattelkupplung nach einem der Ansprüche 1 bis 6,
**dadurch gekennzeichnet,**
**dass** der Sicherungshebel (50) einen schmalen Abschnitt (58a) aufweist, der in Richtung eines ersten Endes (33a) in einen breiten Abschnitt (58b) übergeht.

8. Sattelkupplung nach einem der Ansprüche 1 bis 7,
**dadurch gekennzeichnet,**
**dass** der Zughebel (40) mindestens ein Haltemittel (44) aufweist, das zum Halten des Zughebels (40) in der Sperrstellung des Zuggriffs (32) vorgesehen ist.

9. Sattelkupplung nach einem der Ansprüche 1 bis 8,
**dadurch gekennzeichnet,**
**dass** das Blockierelement (62) in seiner Blockierposition ein Verschwenken des Zuggriffs (32) blockiert, wenn sich der Zuggriff (32) in Sperrstellung befindet.

10. Sattelkupplung nach einem der Ansprüche 1 bis 9,
**dadurch gekennzeichnet,**
**dass** das Blockierelement (62) gravitationsgetrieben in die Blockierposition fällt.

11. Sattelkupplung nach einem der Ansprüche 1 bis 9,
**dadurch gekennzeichnet,**
**dass** das Blockierelement (62) in seiner Bereitschaftsposition mittels einer dritten Federeinrichtung (70) vorgespannt ist.

12. Sattelkupplung nach einem der Ansprüche 1 bis 11,
**dadurch gekennzeichnet,**
**dass** das Blockierelement (62) an der Führungseinrichtung (80) angeordnet ist.

13. Sattelkupplung nach einem der Ansprüche 1 bis 12,
**dadurch gekennzeichnet,**
**dass** der Durchführungsraum (82) eine Öffnung (10) oder eine Ausnehmung in der Sattelkupplungsplatte (2) ist.

14. Sattelkupplung nach einem der Ansprüche 1 bis 13,
**dadurch gekennzeichnet,**
**dass** die Abmessungen des Durchführungsraums (82) und des Zuggriffs (32) derart aufeinander abgestimmt sind, dass der Zuggriff (32) mit in Ruheposition befindlichem Sicherungshebel (50) von einer Freigabestellung in seine Sperrstellung durch den Durchführungsraum (82) bewegbar ist.

15. Sattelkupplung nach einem der Ansprüche 1 bis 14,
**dadurch gekennzeichnet,**
**dass** der Zuggriff (32) eine zweite Federeinrichtung (59) aufweist, die zwischen Zughebel (40) und Sicherungshebel (50) angeordnet ist und dass die zweite Federeinrichtung (59) am ersten Ende (33a) des Zuggriffs (32) angeordnet ist.

16. Sattelkupplung nach einem der Ansprüche 1 bis 15,
**dadurch gekennzeichnet,**
**dass** der Zuggriff (32) einen Griff (56) oder eine pneumatische Betätigungseinrichtung aufweist.

17. Sattelkupplung nach einem der Ansprüche 1 bis 16,
**dadurch gekennzeichnet,**
**dass** der Sicherungshebel (50) eine Schräge (57) aufweist, die in Sperrstellung des Zuggriffs (32) beim Bewegen des Sicherungshebels (50) von der Ruheposition in die Auszugsposition ein Verschwenken des Zuggriffs (32) bewirkt.

## Claims

1. Fifth wheel coupling (1) comprising
- a fifth wheel coupling plate (2),
- a closure element (20) for a kingpin,
- a pull handle (32) which has a pull lever (40) and a securing lever (50) and a first end (33a) of which handle is connected to the closure element (20) by connection means,
- the pull handle (32), in a pass-through space (82) of a guiding device (80) of the fifth wheel coupling plate (2), being movable into a locking position and into a release position, and
- means for blocking the pull handle (32) in its locking position,
**characterized in that** the means for blocking the pull handle (32) consists of a securing device (60) which has a movably arranged blocking element (62), the securing device (60) being arranged on the fifth wheel coupling plate (2), and **in that** the pull handle (32) comprises means for manipulating the securing device (60).

2. Fifth wheel coupling according to claim 1, **characterized in that** the securing device (60) is arranged on an outer surface of the fifth wheel coupling plate (2).

3. Fifth wheel coupling according to either claim 1 or claim 2, **characterized in that** the means for manipulating the blocking element (62) is arranged on the securing lever (50).

4. Fifth wheel coupling according to any one of claims 1 to 3, **characterized in that** the securing lever (50) can be moved in the longitudinal direction of the pull handle (32) relative to the pull lever (40) into a pull-out position and into a rest position.

5. Fifth wheel coupling according to claim 4, **characterized in that** the means for manipulating the blocking element (62) moves the blocking element (62) from a blocking position into a standby position when the securing lever (50) is moved into the pull-out position.

6. Fifth wheel coupling according to any one of claims 1 to 5, **characterized in that** the means for manipulating the blocking element (62) is a projection (54).

7. Fifth wheel coupling according to any one of claims 1 to 6, **characterized in that** the securing lever (50) has a narrow portion (58a) which transitions into a wide portion (58b) in the direction of a first end (33a).

8. Fifth wheel coupling according to any one of claims 1 to 7, **characterized in that** the pull lever (40) has at least one holding means (44) which is provided for holding the pull lever (40) in the locking position of the pull handle (32).

9. Fifth wheel coupling according to any one of claims 1 to 8, **characterized in that** the blocking element (62), when in its blocking position, blocks the pull handle (32) from pivoting when the pull handle (32) is in the locking position.

10. Fifth wheel coupling according to any one of claims 1 to 9, **characterized in that** the blocking element (62) falls into the blocking position, driven by means of gravity.

11. Fifth wheel coupling according to any one of claims 1 to 9, **characterized in that** the blocking element (62) is pretensioned in its standby position by means of a third spring device (70).

12. Fifth wheel coupling according to any one of claims 1 to 11, **characterized in that** the blocking element (62) is arranged on the guiding device (80).

13. Fifth wheel coupling according to any one of claims 1 to 12, **characterized in that** the pass-through space (82) is an opening (10) or a recess in the fifth wheel coupling plate (2).

14. Fifth wheel coupling according to any one of claims 1 to 13, **characterized in that** the dimensions of the pass-through space (82) and the pull handle (32) are matched to one another such that the pull handle (32) can be moved through the pass-through space (82) from a release position into its locking position when the securing lever (50) is in the rest position.

15. Fifth wheel coupling according to any one of claims 1 to 14, **characterized in that** the pull handle (32) has a second spring device (59) which is arranged between the pull lever (40) and the securing lever (50), and **in that** the second spring device (59) is arranged at the first end (33a) of the pull handle (32).

16. Fifth wheel coupling according to any one of claims 1 to 15, **characterized in that** the pull handle (32) has a handle (56) or a pneumatic actuator.

17. Fifth wheel coupling according to any one of claims 1 to 16, **characterized in that** the securing lever (50) has a bevel (57) which, when the pull handle (32) is in the locking position, causes the pull handle (32) to pivot when the securing lever (50) moves from the rest position into the pull-out position.

## Revendications

1. Sellette d'attelage (1), comprenant
- une plaque de sellette d'attelage (2),
- un élément de fermeture (20) pour une cheville ouvrière,
- une poignée de traction (32) qui présente un levier de traction (40) et un levier de fixation (50) et qui est connectée à une première extrémité (33a), par le biais de moyens de connexion, à l'élément de fermeture (20),
- la poignée de traction (32) pouvant être déplacée dans un espace de passage (82) d'un dispositif de guidage (80) de la plaque de sellette d'attelage (2) dans une position de blocage et dans une position de libération, et
- des moyens pour bloquer la poignée de traction (32) dans sa position de blocage,
**caractérisée en ce que** l
es moyens pour bloquer la poignée de traction (32) se composent d'un dispositif de fixation (60) avec un élément de blocage (62) disposé de manière déplaçable, le dispositif de fixation (60) étant disposé au niveau de la plaque de sellette d'attelage (2), et
**en ce que** la poignée de traction (32) présente des moyens de manipulation du dispositif de fixation (60) .

2. Sellette d'attelage selon la revendication 1,
**caractérisée en ce que**
le dispositif de fixation (60) est disposé au niveau d'une surface extérieure de la plaque de sellette d'attelage (2).

3. Sellette d'attelage selon la revendication 1 ou 2,
**caractérisée en ce que**
les moyens de manipulation de l'élément de blocage (62) sont disposés au niveau du levier de fixation (50) .

4. Sellette d'attelage selon l'une quelconque des revendications 1 à 3,
**caractérisée en ce que**
le levier de fixation (50) peut être déplacé dans la direction longitudinale de la poignée de traction (32) par rapport au levier de traction (40) dans une position sortie et dans une position de repos.

5. Sellette d'attelage selon la revendication 4,
**caractérisée en ce que**
le moyen de manipulation de l'élément de blocage (62) déplace l'élément de blocage (62), lors du déplacement du levier de fixation (50) dans la position sortie, d'une position de blocage dans une position disponible.

6. Sellette d'attelage selon l'une quelconque des revendications 1 à 5,
**caractérisée en ce que**
le moyen de manipulation de l'élément de blocage (62) est une saillie (54).

7. Sellette d'attelage selon l'une quelconque des revendications 1 à 6,
**caractérisée en ce que**
le levier de fixation (50) présente une partie étroite (58a) qui se prolonge dans la direction d'une première extrémité (33a) par une partie large (58b).

8. Sellette d'attelage selon l'une quelconque des revendications 1 à 7,
**caractérisée en ce que**
le levier de traction (40) présente au moins un moyen de retenue (44) qui est prévu pour retenir le levier de traction (40) dans la position de blocage de la poignée de traction (32).

9. Sellette d'attelage selon l'une quelconque des revendications 1 à 8,
**caractérisée en ce que**
l'élément de blocage (62), dans sa position de blocage, bloque un pivotement de la poignée de traction (32) lorsque la poignée de traction (32) se trouve dans la position de blocage.

10. Sellette d'attelage selon l'une quelconque des revendications 1 à 9,
**caractérisée en ce que**
l'élément de blocage (62) tombe dans la position de blocage sous l'effet de la gravité.

11. Sellette d'attelage selon l'une quelconque des revendication 1 à 9,
**caractérisée en ce que**
l'élément de blocage (62) dans sa position disponible est précontraint au moyen d'un troisième dispositif de ressort (70).

12. Sellette d'attelage selon l'une quelconque des revendications 1 à 11,
**caractérisée en ce que**
l'élément de blocage (62) est disposé au niveau du dispositif de guidage (80).

13. Sellette d'attelage selon l'une quelconque des revendications 1 à 12,
**caractérisée en ce que**
l'espace de passage (82) est une ouverture (10) ou un évidement dans la plaque de sellette d'attelage (2) .

14. Sellette d'attelage selon l'une quelconque des revendications 1 à 13,
**caractérisée en ce que**
les dimensions de l'espace de passage (82) et de la poignée de traction (32) sont ajustées les unes aux autres de telle sorte que la poignée de traction (32) puisse être déplacée, lorsque le levier de fixation (50) est dans sa position de repos, d'une position de libération dans sa position de blocage à travers l'espace de passage (82) .

15. Sellette d'attelage selon l'une quelconque des revendications 1 à 14,
**caractérisée en ce que**
la poignée de traction (32) présente un deuxième dispositif de ressort (59) qui est disposé entre le levier de traction (40) et le levier de fixation (50) et **en ce que** le deuxième dispositif de ressort (59) est disposé au niveau de la première extrémité (33a) de la poignée de traction (32) .

16. Sellette d'attelage selon l'une quelconque des revendications 1 à 15,
**caractérisée en ce que**
la poignée de traction (32) présente une poignée (56) ou un dispositif d'actionnement pneumatique.

17. Sellette d'attelage selon l'une quelconque des revendications 1 à 16,
**caractérisée en ce que**
le levier de fixation (50) présente un biseau (57) qui, dans la position de blocage de la poignée de traction (32), lorsque le levier de fixation (50) se déplace de la position de repos dans la position sortie, provoque un pivotement de la poignée de traction (32).
